# EUROPÄISCHE PATENTSCHRIFT

(11) **EP 3 414 448 B1**
(45) Veröffentlichungstag und Bekanntmachung des Hinweises auf die Patenterteilung: **07.04.2021**
(21) Anmeldenummer: 16754430.3
(22) Anmeldetag: 02.08.2016
(51) Int. Cl.: F02M 25/14, F02M 25/022, F02M 25/025, F02M 25/028, F02M 25/03, F02B 47/00, F02B 47/02, F02D 41/00, F02D 41/04, F01N 3/20

(54) **SYSTEM ZUR BEVORRATUNG UND ZUFÜHRUNG EINER HILFSFLÜSSIGKEIT AN EINE BRENNKRAFTMASCHINE**
SYSTEM FOR STORING AN AUXILIARY LIQUID AND SUPPLYING SAME TO AN INTERNAL COMBUSTION ENGINE
SYSTÈME DE STOCKAGE D'UN LIQUIDE AUXILIAIRE ET D'ALIMENTATION D'UN MOTEUR À COMBUSTION INTERNE EN LIQUIDE AUXILIAIRE

(30) Priorität: 09.02.2016 DE 102016201943
(43) Veröffentlichungstag der Anmeldung: 19.12.2018
(73) Patentinhaber: Kautex Textron GmbH & Co. KG, 53229 Bonn (DE)
(72) Erfinder: HEIDEMEYER, Timm, 50679 Köln (DE); WOLF, Hartmut, 53639 Königswinter (DE)
(74) Vertreter: Richly & Ritschel Patentanwälte PartG mbB
(86) Internationale Anmeldenummer: PCT/EP2016/068470
(87) Internationale Veröffentlichungsnummer: WO 2017/137101

(56) Entgegenhaltungen:
- EP-A1- 1 925 354
- WO-A1-2010/128531
- DE-T5-112011 104 704
- DE-T5-112011 104 704
- FR-A1- 2 939 481
- US-A1- 2013 000 743

## Beschreibung

Die Erfindung betrifft ein System zur Bevorratung und Zuführung einer Hilfsflüssigkeit an eine Brennkraftmaschine eines Kraftfahrzeuges oder an Teile der Brennkraftmaschine des Kraftfahrzeuges.

Die Erfindung betrifft weiterhin ein Verfahren zum Betrieb eines solchen Systems. Schließlich betrifft die Erfindung ein Anschlussmodul für ein System zur Bevorratung und Zuführung einer Hilfsflüssigkeit an eine Brennkraftmaschine eines Kraftfahrzeuges oder an Teile der Brennkraftmaschine des Kraftfahrzeuges.

Die Erfindung betrifft insbesondere ein Wasserinjektionssystem für die Brennkraftmaschine eines Kraftfahrzeuges. Die Erfindung betrifft darüber hinaus ein heizbares Modul für einen Wasserinjektionstank als Vorratsbehälter des zuvor beschriebenen Systems.

Bei Wasserinjektionssystemen für Kraftfahrzeuge können sowohl der Vorratsbehälter als auch Ventile und Leitungen einfrieren. Eis kann dabei innerhalb des Vorratsbehälters oder innerhalb der Leitungen zu Schäden durch Ausdehnung führen sowie die Zeit bis zur Einsatzbereitschaft des Systems erheblich verlängern. Ein zuvor beschriebenes System muss innerhalb kürzester Zeit nach Start der Brennkraftmaschine einsetzbar sein.

Aus der US 2013/0000743 A1 ist ein Flüssigkeitsverteilungssystem für eine selektive katalytische Reduktion bekannt, umfassend einen Flüssigkeitsspeichertank und ein Flüssigkeitsverteilungsmodul mit einer Flüssigkeitspumpe, die flüssiges Reduktionsmittel aus dem Tankvolumen ansaugt und die Flüssigkeit an einer Modulauslassöffnung bereitstellt.

Die DE 11 2011 104 704 T5 beschreibt ein Dosier- und Einspritzsystem umfassend eine Dosier- und Einspritzeinheit und eine Wasser-Heizeinheit zum Erwärmen der Dosier- und Einspritzeinheit, wobei die Wasser-Heizeinheit eine mehrteilige Wasserzirkulationsleitung umfasst.

Eine Heizvorrichtung für eine in einem Fahrzeugtank enthaltene Lösung aus Wasser und Harnstoff, bestehend aus mindestens einem Verbindungsflansch, von dem mindestens eine Heizleitung ausgeht, in deren Innerem Kühlflüssigkeit des Fahrzeugmotors zirkuliert kann der WO 2010/128531 A1 entnommen werden.

Eine katalytische Reduktionseinrichtung für eine katalytische Reduktion von Stickoxiden in Abgasanlagen kann der EP 1 925 354 A1 entnommen werden. Dabei ist vorgesehen, dass die Reduktionsmittel-Fördereinrichtung zumindest teilweise im und/oder unmittelbar am Reduktionsmitteltank angeordnet ist.

Der FR 2 939 481 A1 kann eine Vorrichtung mit einem Flüssigkeitsbehälter, einer Pumpe und einer Versorgungsleitung, die die Pumpe mit einem Einsatzort verbindet, um die Versorgung des Einsatzortes mit der von der Pumpe im Behälter entnommenen Flüssigkeit zu ermöglichen, entnommen werden, wobei ein Lufteinlass vorgesehen ist, der sich im oberen Teil des Behälters befindet und mit dem Einsatzort und der Versorgungsleitung über eine Hilfsleitung verbunden ist, die mit einem in Reihe geschalteten unidirektionalen Ventil versehen ist, das die Entleerung der Vorrichtung ermöglicht.

Der Erfindung liegt daher die Aufgabe zugrunde, ein System bereitzustellen, das diese Anforderungen erfüllt.

Die Aufgabe wird gelöst mit den Merkmalen der unabhängigen Patentansprüche. Vorteilhafte Ausgestaltungen des Systems sind durch die Unteransprüche erfasst.

Die Aufgabe wird nach einem ersten Aspekt der Erfindung gelöst durch ein System zur Bevorratung und Zuführung einer Hilfsflüssigkeit an eine Brennkraftmaschine eines Kraftfahrzeugs oder an Teile der Brennkraftmaschine des Kraftfahrzeuges, mit einem Vorratsbehälter für die Hilfsflüssigkeit, mit wenigstens einer Förderpumpe für die Hilfsflüssigkeit und mit wenigstens einem Leitungssystem umfassend einen Vorlauf zu einem Verbraucher und einen Rücklauf in den Vorratsbehälter, wobei das System ein Anschlussmodul umfasst, welches in eine Öffnung des Vorratsbehälters eingesetzt ist, wobei das Anschlussmodul mit dem Vorratsbehälter kommunizierende Fluidkanäle aufweist, die an eine Vorlaufleitung und an eine Rücklaufleitung des Leitungssystems angeschlossen sind und wobei das Anschlussmodul einen Modulblock umfasst, der als wärmeleitfähiger und/oder beheizbarer Körper ausgebildet ist, und wobei das Anschlussmodul als schaltbares Mehrwegeventil ausgebildet ist, das bei entsprechender Betätigung eine Belüftung und/oder Entleerung des Leitungssystems ermöglicht, wobei der Modulblock Wärmeleitelemente umfasst, die sich in das Volumen des Vorratsbehälters erstrecken, wobei die Wärmeleitelemente zu dem Leitungssystem beabstandet sind.

Das System gemäß der Offenbarung umfasst einen Vorratsbehälter für das Fluid, wenigstens eine Förderpumpe für das Fluid und wenigstens ein Leitungssystem, umfassend einen Vorlauf zu einem Verbraucher und einen Rücklauf in den Vorratsbehälter. Der Vorratsbehälter kann als Wasserbehälter ausgebildet sein. Alternativ kann der Vorratsbehälter allerdings auch als Vorratsbehälter für eine wässerige Harnstofflösung ausgebildet sein, die zur Abgasnachbehandlung an einer Brennkraftmaschine vorgesehen ist.

Das System kann einen oder mehrere Verbraucher, beispielsweise als Dosiereininheit mit mehreren Injektionsdüsen umfassen, die die Hilfsflüssigkeit in den Ansaugtrakt einer Brennkraftmaschine, in die Brennkammer einer Brennkraftmaschine oder in den Abgasstrang einer Brennkraftmaschine injizieren.

Das eingangs geschilderte Problem wird durch die Bereitstellung eines kompakten beheizbaren Anschlussmoduls gelöst, das wenigstens eine der folgenden Funktionen gewährleistet:
1. Möglichkeit der Entleerung der Flüssigkeit aus dem Vorratsbehälter und/oder aus der Vorlauf- und der Rücklaufleitung und/oder aus der oder den Injektionsdüsen bei Abschalten der Brennkraftmaschine zur Vermeidung von Eisbildung.
2. Auftauen eines ausreichenden Teils des Volumens des Vorratsbehälters für die "Kaltstartphase".
3. Beheizbarkeit von vorgesehenen Ventilen.

Weiterhin ist offenbart, dass das Anschlussmodul als Verschlusskörper für eine Öffnung des Vorratsbehälters ausgebildet ist. Das Anschlussmodul kann beispielsweise seitlich im unteren Drittel des Vorratsbehälters angeordnet sein, vorzugsweise so, dass eine Entnahmeleitung möglichst nahe des Bodens des Vorratsbehälters in diesen mündet.

Vorzugsweise umfasst das Anschlussmodul Mittel zur Entspannung des Rücklaufs des Fluids innerhalb des Vorratsbehälters.

Das offenbarte Anschlussmodul kann beispielsweise eine Entspannungsdüse bzw. Verteilerdüse für einen Rücklauf der Hilfsflüssigkeit beinhalten. Bei einem Wasserinjektionssystem beträgt der Rücklauf etwa 30 1/h mit einem Druck von circa 7 Bar. Der Rücklaufstrom, der eine signifikante Wärmeenergie enthält (175 W bei ΔT 5K) wird offenbarungsgemäß zum Auftauen des Vorratsbehälters genutzt und kann beispielsweise mittels der Rücklaufdüse, die an dem Anschlussmodul behälterseitig vorgesehen ist, gegen etwa innerhalb des Vorratsbehälters befindliches Eis gespritzt werden.

Das Anschlussmodul selbst kann bei einer bevorzugten Variante der Offenbarung als Heizkörper ausgebildet sein bzw. elektrisch beheizt sein. Hierzu kann das Anschlussmodul mit Widerstandsheizelementen in Form von NTCs oder in Form von PTCs versehen sein. Alternativ kann vorgesehen sein, das Anschlussmodul induktiv zu erwärmen.

Eine vorzugsweise elektrische Beheizung das Anschlussmoduls oder des Wärmeleitkörpers/Heizkörpers des Anschlussmoduls kann zum Auftauen etwa gefrorenen Fluids innerhalb des Vorratsbehälters während einer Startphase der Brennkraftmaschine vorgesehen sein, während dessen noch kein Rücklauf des Fluids vorhanden ist.

Vorzugsweise umfasst das Anschlussmodul einen betätigbar ansteuerbaren Belüftungsanschluss, dem vorzugsweise ein Filter vorgeschaltet ist. Dadurch ist es möglich, die Flüssigkeit aus dem Vorratsbehälter und/oder aus der Vorlaufleitung und/oder aus der Rücklaufleitung und/oder aus den Injektionsdüsen bei Abschaltung der Brennkraftmaschine zu entleeren.

Um die Vorlaufleitung und die Rücklaufleitung des Leitungssystems aktiv belüften zu können, kann das Anschlussmodul ein Mehrwegeventil umfassen oder als solches ausgebildet sein. Bevorzugt ist das Anschlussmodul als Fünf-/Vierwegeventil zur Realisierung der benötigten Schaltstellungen ausgebildet.

Zweckmäßigerweise umfasst das Anschlussmodul eine elektrische Auftauheizung und der Wärmeleitkörper ist zweckmäßigerweise als Heizkörper der elektrischen Auftauheizung ausgebildet.

Ein unabhängiger Gedanke der Offenbarung ist es, ein System zur Bevorratung und Zuführung einer Hilfsflüssigkeit an eine Brennkraftmaschine eines Kraftfahrzeuges oder an Teile der Brennkraftmaschine des Kraftfahrzeuges bereitzustellen, bei welchem eine Entleerung bzw. Belüftung sowohl der Rücklaufleitung als auch der Vorlaufleitung und ggfls. auch eine Drainage des Vorratsbehälters zu Servicezwecken möglich ist.

Das System kann eine reversierbare Förderpumpe umfassen, die dazu in der Lage ist, auch kompressible Medien wie Luft zu fördern. Eine Entleerung bzw. Belüftung des Leitungssystems kann dadurch erfolgen, dass die Förderpumpe solange rückwärts betrieben wird, bis das Anschlussmodul über einen Belüftungsanschluss Luft aus der Umgebung zieht. Die im Vorlauf befindliche Flüssigkeit wird durch den Vorlauf zurück in den Vorratsbehälter gefördert. Dabei gelangt Luft aus der Umgebung über den Belüftungsanschluss des Anschlussmoduls in die Rücklaufleitung. Die dort eintretende Luft drückt die Flüssigkeit aus der Rücklaufleitung über die Förderpumpe gegebenenfalls über ein zwischengeschaltetes Filter in die Vorlaufleitung und in den Vorratsbehälter, bis das Leitungssystem entleert bzw. belüftet ist. Dieser Vorgang kann nach jeder Außerbetriebnahme der Brennkraftmaschine durchgeführt werden, und zwar gegebenenfalls auch in Abhängigkeit der Umgebungstemperatur.

Vorzugsweise umfasst das System Mittel zur Steuerung der Belüftung und/oder Entleerung des Leitungssystems in Abhängigkeit des Betriebszustandes der Brennkraftmaschine und/oder in Abhängigkeit der Umgebungstemperatur und/oder in Abhängigkeit der Fluidtemperatur und/oder in Abhängigkeit des Förderdrucks im System.

Das Anschlussmodul kann sowohl an der Vorratsbehälterseitenfläche als auch an der Vorratsbehälterunterseite befestigt sein. Das Anschlussmodul kann beispielsweise in eine bodenseitige Öffnung des Vorratsbehälters eingesetzt sein.

Wenn das Modul an der Seitenfläche des Vorratsbehälters angebracht ist, kann der Absaugpunkt mittels eines geeigneten Siphons vor einlaufendem Wasser nach der Leitungsspülphase geschützt werden.

In der Rücklaufleitung in den Vorratsbehälter oder vor oder an deren Einmündung in den Vorratsbehälter kann ein Rückschlagventil vorgesehen sein, dass beim Belüften und/oder Entleeren des Systems ein Rücksaugen von Flüssigkeit aus dem Vorratsbehälter in das Leitungssystem verhindert.

Nach einem zweiten Aspekt löst die Aufgabe ein Verfahren zum Betrieb eines Systems zur Bevorratung und Zuführung einer Hilfsflüssigkeit an eine Brennkraftmaschine eines Kraftfahrzeuges oder an Teile der Brennkraftmaschine des Kraftfahrzeuges nach dem ersten Aspekt der Erfindung, wobei eine Belüftung und/oder Entleerung des Leitungssystems jeweils nach Außerbetriebnahme der Brennkraftmaschine und vorzugsweise in Abhängigkeit der Umgebungstemperatur vorgesehen ist.

Die Offenbarung betrifft ein Verfahren zum Betrieb eines Systems zur Bevorratung und Zuführung einer Hilfsflüssigkeit an eine Brennkraftmaschine eines Kraftfahrzeuges, mit einem Vorratsbehälter für das Fluid, mit wenigstens einer Förderpumpe für das Fluid und mit wenigstens einem Leitungssystem umfassend einen Vorlauf zu einem Verbraucher und einen Rücklauf in den Vorratsbehälter, wobei eine Belüftung und/oder Entleerung des Leitungssystems jeweils nach Außerbetriebnahme der Brennkraftmaschine und vorzugsweise in Abhängigkeit der Umgebungstemperatur vorgesehen ist.

Nach einem dritten Aspekt der Erfindung löst die Aufgabe ein beheizbares Anschlussmodul für einen Wasser-Injektionstank als Vorratsbehälter für ein System zur Bevorratung und Zuführung von Hilfsflüssigkeit an eine Brennkraftmaschine eines Kraftfahrzeuges nach dem ersten Aspekt der Erfindung wobei das Anschlussmodul als Verschlusskörper für eine Öffnung eines Vorratsbehälters ausgebildet ist, wobei das Anschlussmodul mit dem Vorratsbehälter kommunizierende Fluidkanäle aufweist, die an eine Vorlaufleitung und an eine Rücklaufleitung eines Leitungssystems anschließbar sind und wobei das Anschlussmodul einen Modulblock umfasst, der als wärmeleitfähiger und/oder beheizbarer Körper ausgebildet ist und der als schaltbares Mehrwegeventil mit einem Belüftungsanschluss und/oder Entleerungsanschluss ausgebildet ist, wobei der Modulblock Wärmeleitelemente umfasst, die dazu ausgebildet sind, sich in das Volumen des Vorratsbehälters zu erstrecken und zu dem Leitungssystem beabstandet zu sein.

Die Offenbarung betrifft ein beheizbares Anschlussmodul für einen Wasser-Injektionstank als Vorratsbehälter für ein System zur Bevorratung und Zuführung von Wasser an eine Brennkraftmaschine eines Kraftfahrzeuges, wobei das Anschlussmodul als Verschlusskörper für eine Öffnung eines Vorratsbehälters ausgebildet ist, wobei das Anschlussmodul mit dem Vorratsbehälter kommunizierende Fluidkanäle aufweist, die an eine Vorlaufleitung und an eine Rücklaufleitung eines Leitungssystems anschließbar sind und wobei das Anschlussmodul einen Modulblock umfasst, der als wärmeleitfähiger und/oder beheizbarer Körper ausgebildet ist und der vorzugsweise als Mehrwegeventil mit einem Belüftungsanschluss ausgebildet ist.

Ein Ausführungsbeispiel der Erfindung wird nachstehend anhand der beigefügten Zeichnungen erläutert.

Es zeigen:
- Figur 1a: eine Teilschnittansicht durch einen Vorratsbehälter mit einem Anschlussmodul gemäß der Erfindung
- Figur 1b: eine Ansicht entlang der Pfeile A-A in Figur 1a
- Figur 2: eine der Figur 1b entsprechende Ansicht, bei welcher die gegenständlichen Schaltfunktionen des Mehrwegeventils symbolisch dargestellt sind,
- Figuren 3a-g: verschiedene Betriebszustände des Systems, die jeweils durch verschiedene Schaltzustände des Mehrwegeventils veranschaulicht sind,
- Figur 4a: eine Ansicht einer Anordnung von Entspannungsdüsen mit einem davor angeordneten Flügelrad,
- Figur 4b: eine Draufsicht auf das in Figur 4a dargestellte Flügelrad,
- Figur 5a: eine Draufsicht auf einen drehbaren Düsenstock, der als Wasserreaktionsrad ausgebildet ist,
- Figur 5b: eine Seitenansicht des in Figur 5a dargestellten Düsenstocks,
- Figur 6: eine Seitenansicht einer Entspannungsdüse mit einem davor angeordneten Prallkörper (Kegelverteiler),
- Figur 7: eine schematische grafische Darstellung der verschiedenen Betriebszustände des Systems und

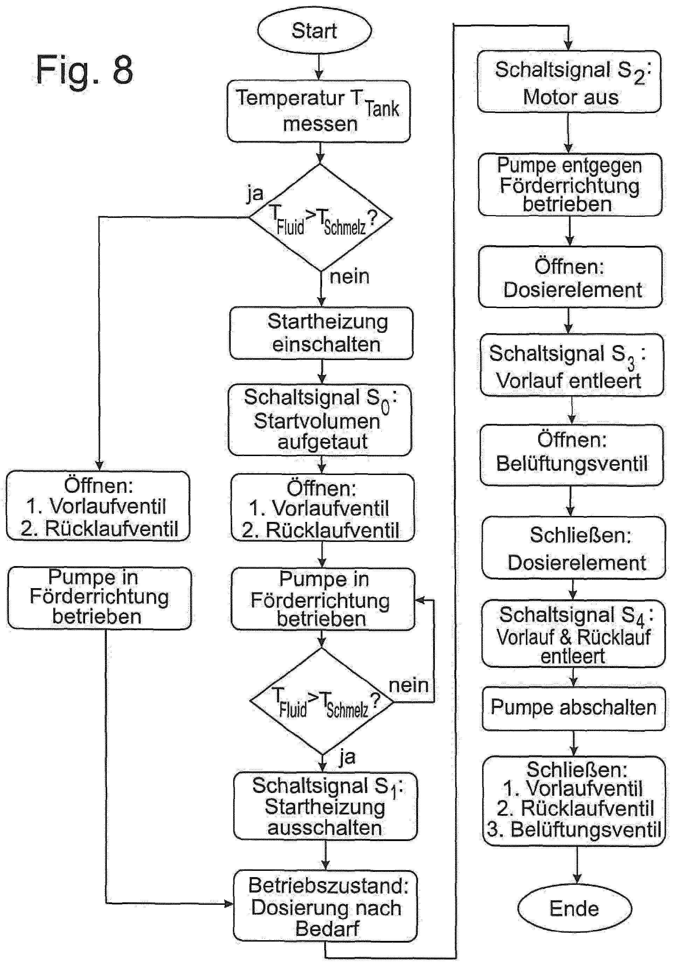

- Figur 8: einen Programmablaufplan, der den schematischen Ablauf verschiedener Betriebszyklen des Systems veranschaulicht.

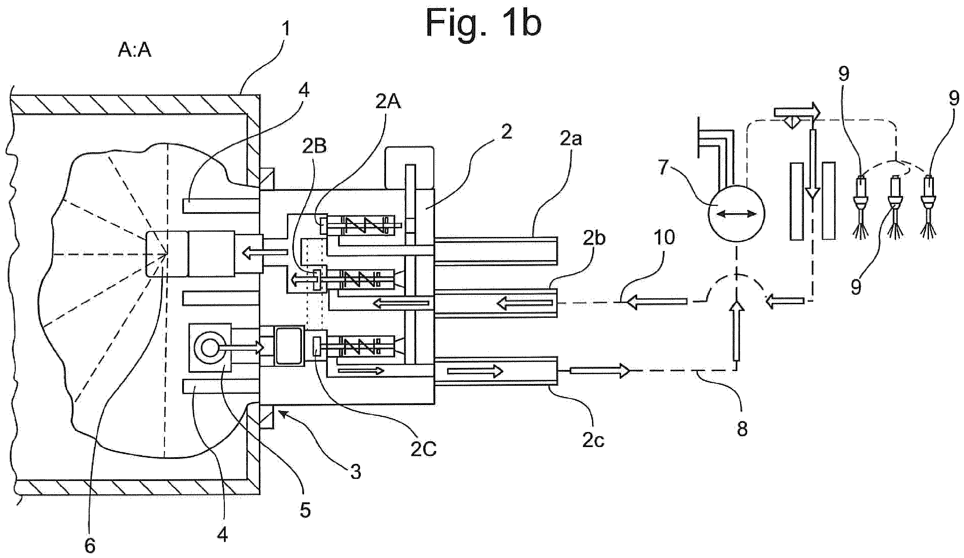

Es wird zunächst Bezug genommen auf Figur 1b. Figur 1b zeigt einen Teil eines Vorratsbehälters 1 und das an den Vorratsbehälter angeschlossene Anschlussmodul 2, das einen Belüftungsanschluss 2a, einen Rücklaufanschluss 2b und einen Vorlaufanschluss 2c aufweist. Das Anschlussmodul 2 ist als Verschlusskörper für eine Öffnung 3 in dem Vorratsbehälter 1 ausgebildet. Das Anschlussmodul 2 umfasst einen Modulkörper bzw. Modulblock, der als wärmeleitfähiger Körper ausgebildet ist und der Wärmeleitelemente 4 umfasst, die sich in das Volumen des Vorratsbehälters 1 erstecken. Die Wärmeleitelemente 4 dienen als Heizkörper, der Teil einer elektrischen Auftauheizung ist.

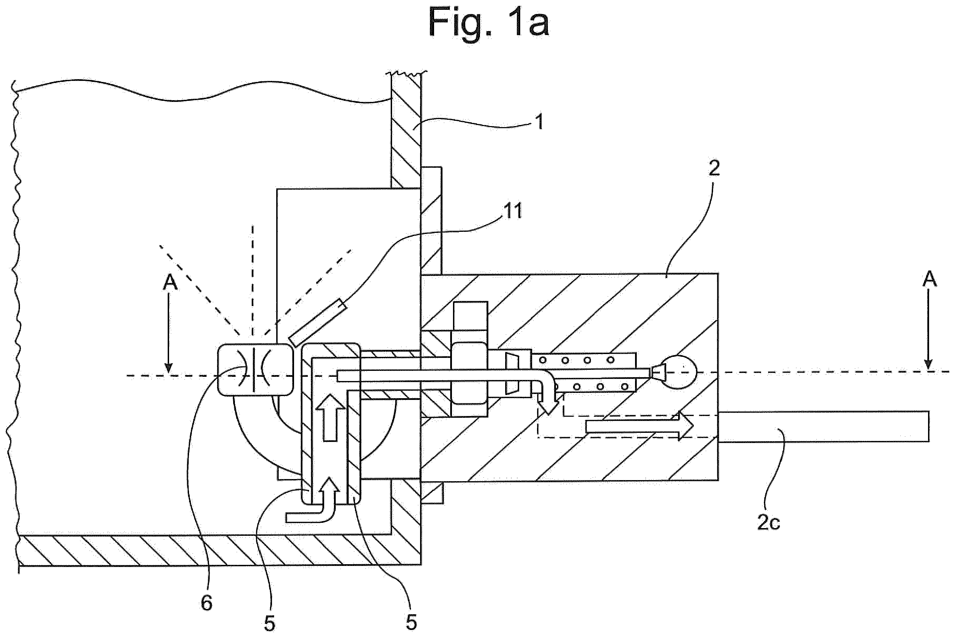

Wie auch aus Figur 1a ersichtlich ist, umfasst das Anschlussmodul 2 behälterseitig einen Ansaugstutzen 5 sowie eine als Verteilerdüse ausgebildete Entspannungsdüse 6 zur Entspannung und Rückführung des Rücklaufs.

Der Ansaugstutzen 5, der einen Absaugpunkt innerhalb des Vorratsbehälters 1 definiert, bildet ein Steigrohr oder einen Siphon, der nach dem Entleeren des Systems, wie nachstehend noch beschrieben wird, eine Vorlaufleitung vor einlaufendem Wasser schützt.

Das Anschlussmodul 2 ist elektrisch beheizbar, beispielsweise induktiv oder mittels wenigstens eines elektrisch kontaktierten Heizelements.

Das System umfasst eine reversierbare Förderpumpe 7, die über die Vorlaufleitung 8 Wasser aus dem Vorratsbehälter 1 über einen Verteiler mehreren Injektionsdüsen 9 als Verbraucher zuführt. Das nicht injizierte Wasser wird über eine Rücklaufleitung 10 und den Rücklaufanschluss 2b in den Vorratsbehälter 1 zurückgefördert, wobei das unter Druck stehende Wasser über die Entspannungsdüse 6 innerhalb des Vorratsbehälters nach oben verteilt wird. Die Wärme des heißen Rücklaufs überträgt sich über den wärmeleitfähigen Modulblock und über die Wärmeleitkörper 4 in die bevorratete Flüssigkeit.

Sollte sich während der Startphase der Brennkraftmaschine innerhalb des in dem Vorratsbehälter 1 gefrorenen Fluids eine Kavität ausbilden, so erfolgt eine Auftauung des restlichen Eises über einen in der Einbaulage des Systems nach oben gerichteten Sprühkegel des Rücklaufs.

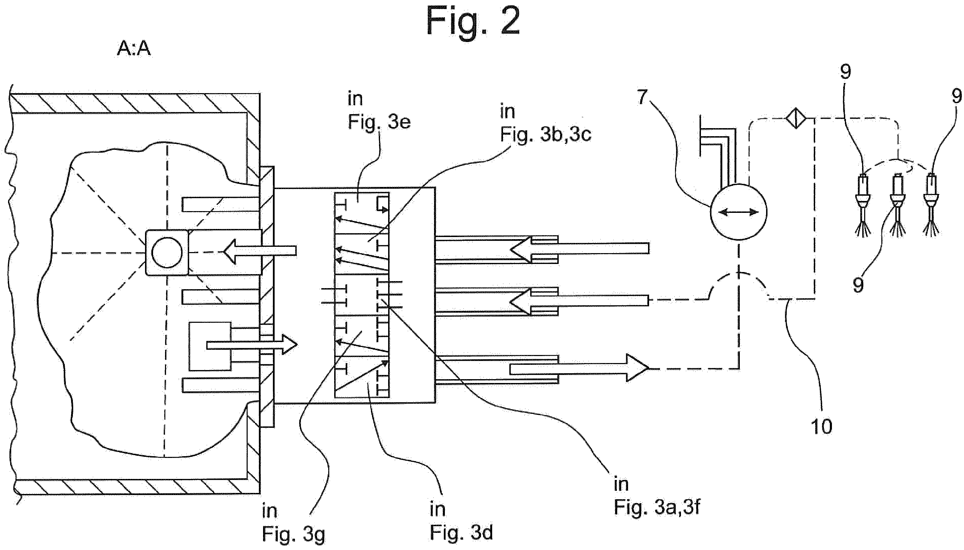

Wie das insbesondere der Figur 2 zu entnehmen ist, ist das Anschlussmodul als Fünf-/Vier-Wegeventil ausgebildet (fünf Schaltstellungen / vier Wege).

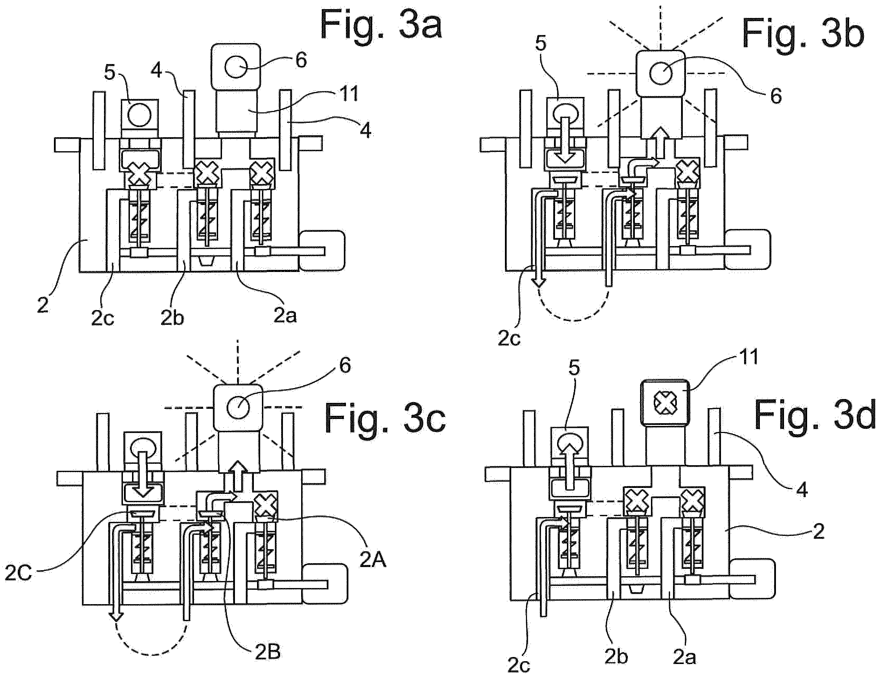

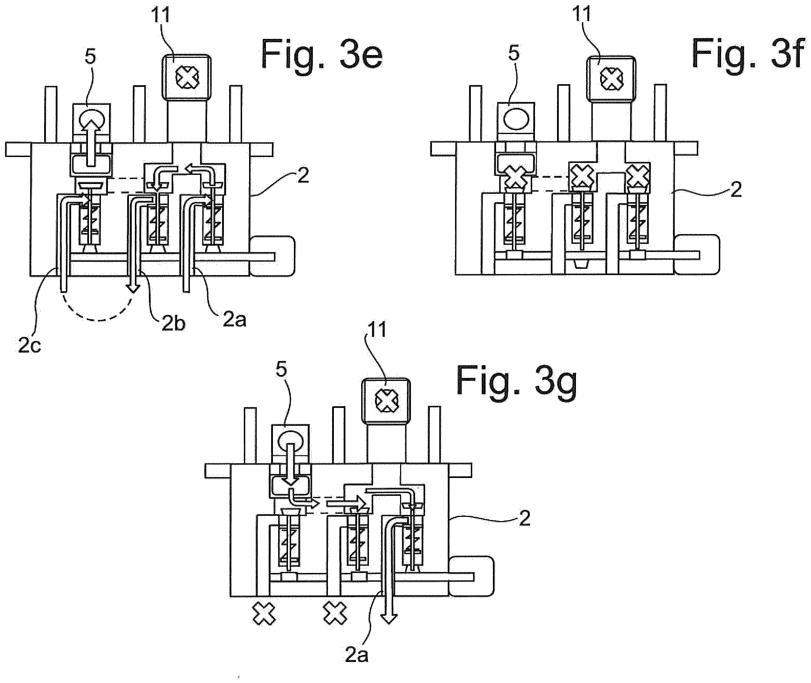

Die verschiedenen Schaltstellungen bzw. Betriebsphasen des Systems sind in Figur 3 dargestellt. Das Anschlussmodul umfasst ein Belüftungsventil 2 A, ein Vorlaufventil 2 C und ein Rücklaufventil 2 B.

Figur 3a veranschaulicht eine Betriebsphase des Systems, in welcher das Anschlussmodul 2 als Heizkörper (elektrische Beheizung) betrieben wird, wobei die über die Wärmeleitkörper 4 in den Vorratsbehälter 1 eingebrachte Wärme dazu genutzt wird, das Eis, welches unmittelbar an das Anschlussmodul behälterseitig angegrenzt, aufzutauen. Nach Beendigung dieser ersten Auftauphase, bei welcher sich das Mehrwegeventil in der Mittelstellung gemäß Figur 2 befindet und alle Anschlüsse geschlossen sind, wird sodann auch unter elektrischer Beheizung des Anschlussmoduls Wasser über den Ansaugstutzen 5 entnommen (Fig3b) und über den Vorlaufanschluss 2c und die Vorlaufleitung 8 an die Injektionsdüsen 9 geliefert. Dabei stellt sich ein Rücklauf ein, der mittels der Entspannungsdüse 6 in den Vorratsbehälter 1 eingeleitet wird.

In Figur 3c ist eine weitere Betriebsphase des Systems dargestellt, bei der kein elektrischer Heizbetrieb vorgesehen ist, im Übrigen entspricht allerdings die Schaltstellung des Mehrwegeventils derjenigen in Figur 3b.

In Figur 3d ist eine Betriebsphase des Systems dargestellt, bei der zunächst die Injektionsdüsen 9 gespült werden, weshalb die Förderrichtung der Förderpumpe 7 bei geöffneten Injektionsdüsen 9 umgekehrt wird und der Ansaugstutzen 5 mit dem Vorlaufanschluss 2c verbunden wird.

In dieser Betriebsphase verschließt eine Dichtklappe 11 die Entspannungsdüse 6. Der Rücklaufanschluss 2 b und der Belüftungsanschluss 2 a sind geschlossen, die Förderpumpe 7 zieht zunächst das Wasser, welches vor den Injektionsdüsen 9 ansteht in den Vorratsbehälter 1 zurück. Danach wenn die Injektionsdüsen 9 geschlossen und der Belüftungsanschluss 2 a wird geöffnet.

Um zu verhindern, dass beim Spülen der Injektionsdüsen 9 Verunreinigungen in das Leitungssystem eingebracht werden, kann in der Rücklaufleitung 10 ein Filter vorgesehen sein.

Eine weitere Betriebsphase, bei der die Vorlaufleitung 8 belüftet bzw. gespült wird, ist in Figur 3e dargestellt. Dabei ist der Belüftungsanschluss 2a zur Umgebung geöffnet und die Förderpumpe 7 kann Luft über den Belüftungsanschluss 2a in die Rücklaufleitung 10 ziehen, und zwar so lange, bis über die Vorlaufleitung 8 sämtliche Flüssigkeit aus dem System in den Vorratsbehälter 1 zurückgefördert ist.

Figur 3f veranschaulicht eine Schaltstellung des Mehrwegeventils bei vollständig heruntergefahrenem belüfteten System.

In Figur 3g ist schließlich die Schaltstellung des Mehrwegeventils veranschaulicht, wenn der Vorratsbehälter 1 zu Servicezwecken entleert werden soll.

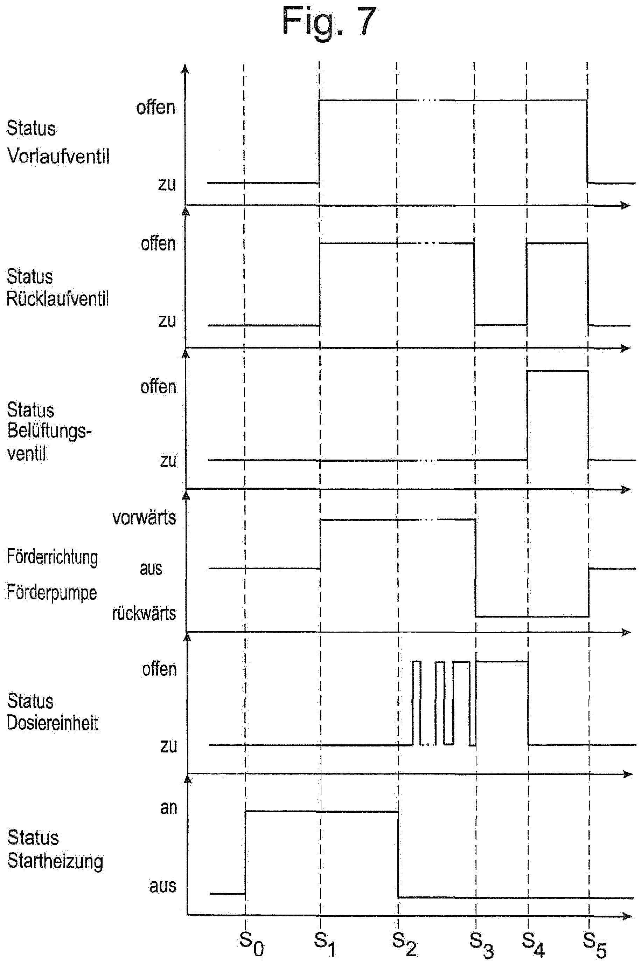

Zur Funktionsweise des Systems wird weiterhin auf Figur 7 Bezug genommen mit S₀, S₁, S₂, S₃, S₄ und S₅ sind die verschiedenen Schaltpositionen des Mehrwegeventils bezeichnet, die auf einer Zeitachse dargestellt sind.Auf der Ordinate sind die Schaltzustände der Ventile und die Betriebszustände der Förderpumpe 7 und der Dosiereinheit (Injektionsdüsen 9) dargestellt. Der Zeitabschnitt bis zur Schaltposition S0 ist der Leerlaufzustand des Systems. In diesem Zustand ist die Startheizung aus, die Dosiereinheit bzw. die Injektionsdüsen 9 sind geschlossen. Die Förderpumpe 7 ist aus, das Belüftungsventil 2 A, das Rücklaufventil 2 B und das Vorlaufventil 2 C sind geschlossen.
Die Schaltposition S₀ ist derjenige Zustand des Systems, bei dem der elektrische Auftauvorgang ohne Zirkulation des Fluids durchgeführt wird. Bei Schaltposition S₁ wird ein Auftauen durch Zirkulation des Fluids bewirkt wird, die Schaltposition S₂ besteht bei Betrieb der Dosiereinheit, die Schaltposition S₃ leitet die Belüftung der Vorlaufleitung 8 ein, die Schaltposition S₄ leitet die Belüftung der Rücklaufleitung 10 ein und die Schaltposition S₅ wird bei Leerlauf des Systems eingenommen. Die verschiedenen Betriebszustände der Startheizung, der Dosiereinheit, der Förderpumpe 7, des Belüftungsventils 2 A, des Rücklaufventils 2 B und des Vorlaufventils 2 C sind über die eingezeichneten Graphen ablesbar.

Um eine gleichmäßigere Verteilung des erwärmten Rücklaufvolumenstroms des Fluids innerhalb des Vorratsbehälters 1 zu bewirken ist nach einer Variante der Offenbarung vorgesehen, vor der Entspannungsdüse 6 ein Flügelrad 12 anzuordnen, welches drehbar gelagert ist und mit dem Fluid beaufschlagbar ist und welches über das aus der Entspannungsdüse 6 austretende Fluid antreibbar ist.

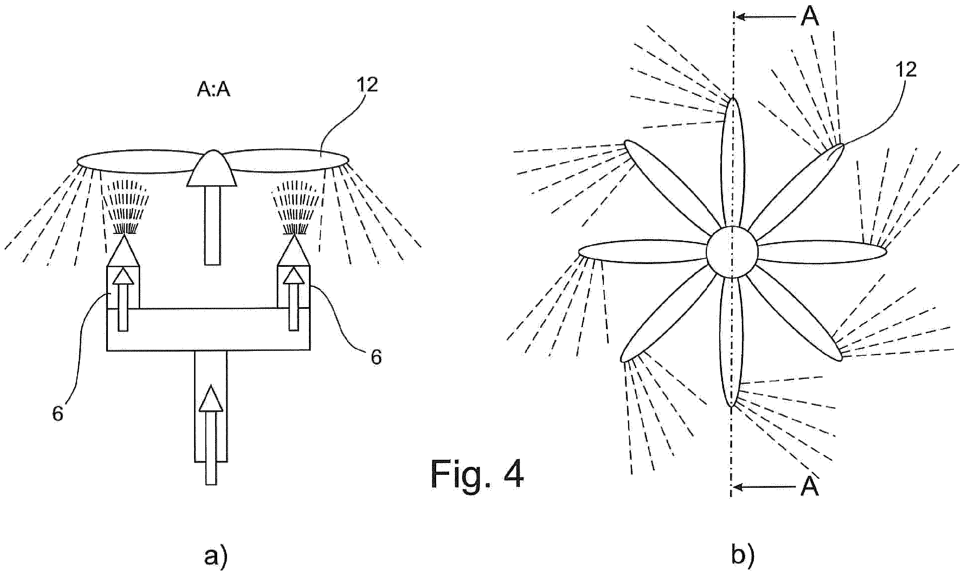

Wie dies insbesondere in Figur 4a dargestellt ist, ist bei dieser Variante des offenbarungsgemäßen Systems vorgesehen, dass zwei Entspannungsdüsen 6 an einen Rücklaufverteiler angeschlossen sind, der als Y-Verteiler ausgebildet ist.

Das Flügelrad 15 umfasst zwei Propellerflügel, die jeweils ein hydraulisch wirksames Profil aufweisen. Die die symmetrisch bezüglich des Flügelrades angeordneten Entspannungsdüsen entspannen das Fluid in Richtung auf das Flügelrad 12 und bewirken ein Antreiben des Flügelrades 12 das durch die Dynamik des Fluids in Drehung versetzt wird. Der jeweils aus den Entspannungsdüse 6 austretende Sprühkegel wird durch die Drehung des Flügelrades 12 verhältnismäßig großflächig innerhalb des Vorratsbehälters 1 verteilt.

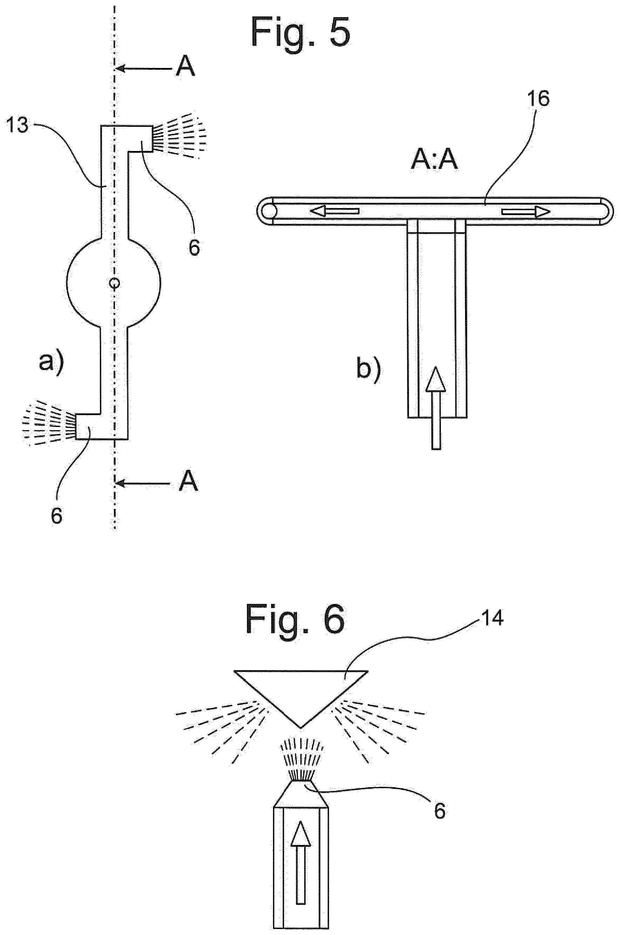

Eine weitere Variante des Systems gemäß der Offenbarung ist in Figur 5 dargestellt, die einen drehbaren Düsenstock 13 zeigt, an dem zwei Entspannungsdüsen 6 angeordnet sind, die jeweils Austrittsöffnungen aufweisen, die in diametral entgegengesetzte Richtung zeigen. Dadurch werden jeweils entgegengesetzte Impulse bei der Entspannung des Fluids erzeugt, die ein Drehmoment in den Düsenstock 13 einleiten und diesen folglich in Drehung versetzen. Dadurch wird eine gleichmäßige und großflächige Verteilung des entspannten, erwärmten Fluids nach Art eines Rasensprengers erzeugt.

Eine weitere Variante des Systems gemäß der Offenbarung ist in Figur 6 dargestellt. Dieses System umfasst eine Entspannungsdüse 6, vor der ein Prallkörper 14 angeordnet ist. Der Prallkörper 14 ist als Kegel/Prisma ausgebildet, wobei die Spitze des Kegels in Richtung auf die Entspannungsdüse 6 zeigt und bezüglich einer Austrittsöffnung der Entspannungsdüse 6 symmetrisch angeordnet ist. Auf diese Art und Weise reflektiert und vervielfältigt der Prallkörper 14 den aus der Entspannungsdüse 6 austretenden Sprühkegel des Fluids.

Bei jedem der in den Figuren 4 bis 6 gezeigten Ausführungsbeispiele sind Mittel zur Vergrößerung/Verteilung des aus einer oder mehreren Entspannungsdüse 6 austretenden Sprühkegels des entspannten Fluids vorgesehen, die unmittelbar vor der betreffenden Entspannungsdüse 6 angeordnet sind.

### Bezugszeichenliste:

- 1: Vorratsbehälter
- 2a: Belüftungsanschluss
- 2b: Rücklaufanschluss
- 2c: Vorlaufanschluss
- 2 A: Belüftungsventil
- 2 B: Rücklaufventil
- 2 C: Vorlaufventil
- 3: Öffnung im Vorratsbehälter 1
- 4: Wärmeleitkörper
- 5: Ansaugstutzen
- 6: Entspannungsdüse
- 7: Förderpumpe
- 8: Vorlaufleitung
- 9: Injektionsdüsen
- 10: Rücklaufleitung
- 11: Dichtklappe
- 12: Flügelrad
- 13: Düsenstock
- 14: Prallkörper

## Patentansprüche

1. System zur Bevorratung und Zuführung einer Hilfsflüssigkeit an eine Brennkraftmaschine eines Kraftfahrzeugs oder an Teile der Brennkraftmaschine des Kraftfahrzeuges, mit einem Vorratsbehälter (1) für die Hilfsflüssigkeit, mit wenigstens einer Förderpumpe (7) für die Hilfsflüssigkeit und mit wenigstens einem Leitungssystem umfassend einen Vorlauf zu einem Verbraucher und einen Rücklauf in den Vorratsbehälter (1), wobei das System ein Anschlussmodul (2) umfasst, welches in eine Öffnung des Vorratsbehälters (1) eingesetzt ist, wobei das Anschlussmodul(2) mit dem Vorratsbehälter(1) kommunizierende Fluidkanäle aufweist, die an eine Vorlaufleitung(8)und an eine Rücklaufleitung (10) des Leitungssystems angeschlossen sind und wobei das Anschlussmodul (2) einen Modulblock umfasst, der als wärmeleitfähiger und/oder beheizbarer Körper ausgebildet ist, und wobei das Anschlussmodul (2) als schaltbares Mehrwegeventil ausgebildet ist, das bei entsprechender Betätigung eine Belüftung und/oder Entleerung des Leitungssystems ermöglicht,
**dadurch gekennzeichnet, dass** der Modulblock Wärmeleitelemente (4) umfasst, die sich in das Volumen des Vorratsbehälters (1) erstrecken, wobei die Wärmeleitelemente (4) zu dem Leitungssystem beabstandet sind.

2. System nach Anspruch 1, **dadurch gekennzeichnet, dass** das Anschlussmodul (2) Mittel zur Entspannung des Rücklaufs der Hilfsflüssigkeit innerhalb des Vorratsbehälters (1) umfasst.

3. System nach einem der Ansprüche 1 oder 2, **dadurch gekennzeichnet, dass** das Anschlussmodul (2) einen betätigbar ansteuerbaren Belüftungsanschluss (2a) umfasst, dem vorzugsweise ein Filter vorgeschaltet ist.

4. System nach einem der Ansprüche 1 bis 3, **dadurch gekennzeichnet, dass** das Anschlussmodul eine elektrische Auftauheizung umfasst und dass der Wärmeleitkörper (4) als Heizkörper der elektrischen Auftauheizung ausgebildet ist.

5. System nach einem der Ansprüche 1 bis 4, **gekennzeichnet durch** Mittel zur Belüftung und/oder Entleerung des Leitungssystems nach Außerbetriebnahme der Brennkraftmaschine.

6. System nach Anspruch 5, **dadurch gekennzeichnet, dass** Mittel zur Steuerung der Belüftung und/oder Entleerung des Leitungssystems in Abhängigkeit des Betriebszustandes der Brennkraftmaschine und/oder des Systems vorgesehen sind.

7. System nach einem der Ansprüche 5 oder 6, **dadurch gekennzeichnet, dass** ein in dem Vorratsbehälter (1) vorgesehener Absaugpunkt der Vorlaufleitung (8) stromaufwärts eines Siphons oder eines Steigrohres in der Vorlaufleitung angeordnet ist.

8. System nach einem der Ansprüche 5 bis 7, **dadurch gekennzeichnet, dass** in der Rücklaufleitung (10) in dem Vorratsbehälter (1) oder vor oder an deren Einmündung in den Vorratsbehälter (1) ein Rückschlagventil (11) vorgesehen ist, welches beim Belüfteten und/oder Entleeren des Systems ein Rücksaugen von Hilfsflüssigkeit aus dem Vorratsbehälter (1) in das Leitungssystem verhindert.

9. Verfahren zum Betrieb eines Systems zur Bevorratung und Zuführung einer Hilfsflüssigkeit an eine Brennkraftmaschine eines Kraftfahrzeuges oder an Teile der Brennkraftmaschine des Kraftfahrzeuges nach einem der Ansprüche 1 bis 8, **dadurch gekennzeichnet, dass** eine Belüftung und/oder Entleerung des Leitungssystems jeweils nach Außerbetriebnahme der Brennkraftmaschine und vorzugsweise in Abhängigkeit der Umgebungstemperatur vorgesehen ist.

10. Beheizbares Anschlussmodul für einen Wasser-Injektionstank als Vorratsbehälter für ein System zur Bevorratung und Zuführung von Hilfsflüssigkeit an eine Brennkraftmaschine eines Kraftfahrzeuges nach einem der Ansprüche 1 bis 8 wobei das Anschlussmodul (2) als Verschlusskörper für eine Öffnung des Vorratsbehälters (1) ausgebildet ist, wobei das Anschlussmodul (2) Fluidkanäle aufweist, die an eine Vorlaufleitung (8) und an eine Rücklaufleitung (10) eines Leitungssystems zum Kommunizieren mit dem Vorratsbehälter (1) anschließbar sind und wobei das Anschlussmodul (2) einen Modulblock umfasst, der als wärmeleitfähiger und/oder beheizbarer Körper ausgebildet ist und der als schaltbares Mehrwegeventil mit einem Belüftungsanschluss und/oder Entleerungsanschluss ausgebildet ist,
**dadurch gekennzeichnet, dass**
der Modulblock Wärmeleitelemente (4) umfasst, die dazu ausgebildet sind, sich in das Volumen des Vorratsbehälters (1) zu erstrecken und zu dem Leitungssystem beabstandet zu sein.

## Claims

1. A system for storing and feeding an auxiliary liquid to an internal combustion engine of a motor vehicle or to parts of the internal combustion engine of the motor vehicle, having a storage vessel (1) for the fluid, having at least one delivery pump (7) for the fluid, and having at least one line system comprising an inflow to a consumer and a return flow into the storage vessel (1), the system comprising a connector module (2) which is inserted into an opening of the storage vessel (1), the connector module (2) having fluid ducts which communicate with the storage vessel (1) and are connected to an inflow line (8) and to a return flow line (10) of the line system, and the connector module (2) comprising a module block which is configured as a thermally conductive and/or heatable body, whereby the connector module (2) is configured as a switchable multiway valve which, upon corresponding actuation, makes ventilation and/or emptying of the line system possible, **characterized in that** the module block comprises thermally conducting elements (4) which extend into the volume of the storage vessel (1), the thermally conducting elements (4) being spaced apart from the line system.

2. The system as claimed in claim 1, **characterized in that** the connector module (2) comprises means for expanding the return flow of the fluid within the storage vessel (1).

3. The system as claimed in one of claims 1 and 2, **characterized in that** the connector module (2) comprises a ventilation connector (2a) which can be activated operably and upstream of which a filter is preferably connected.

4. The system as claimed in one of claims 1 to 3, **characterized in that** the connector module (2) comprises an electric defrosting heater, and **in that** the thermally conducting body (4) is configured as a heating body of the electric defrosting heater.

5. The system as claimed in one of claims 1 to 4, **characterized by** having means for ventilating and/or emptying the line system after shutdown of the internal combustion engine.

6. The system as claimed in claim 5, **characterized in that** means for controlling the ventilation and/or emptying of the line system in a manner which is dependent on the operating state of the internal combustion engine and/or the system are provided.

7. The system as claimed in either of claims 5 and 6, **characterized in that** an extraction point of the inflow line (8), which extraction point is provided in the storage vessel (1), is arranged upstream of a siphon or a riser pipe in the inflow line.

8. The system as claimed in one of claims 5 to 7, **characterized in that** a check valve (11) is provided in the return flow line (10) in the storage vessel (1) or upstream of or at the opening thereof into the storage vessel (1), which check valve (11) prevents liquid being sucked back out of the storage vessel (1) into the line system upon the ventilation and/or emptying of the system.

9. A method for operating a system for storing and feeding an auxiliary liquid to an internal combustion engine of a motor vehicle or to parts of the internal combustion engine of the motor vehicle as claimed in one of claims 1 to 8, **characterized in that** ventilation and/or emptying of the line system are/is provided in each case after shutdown of the internal combustion engine and preferably in a manner which is dependent on the ambient temperature.

10. A heatable connector module for a water injection tank as a storage vessel for a system for storing and feeding an auxiliary liquid to an internal combustion engine of a motor vehicle as claimed in one of claims 1 to 8, the connector module (2) being configured as a closure body for an opening of a storage vessel (1), the connector module (2) having fluid ducts which communicate with the storage vessel (1) and can be connected to an inflow line (8) and to a return flow line (10) of a line system, and the connector module (2) comprising a module block which is configured as a thermally conductive and/or heatable body, whereby the connector module (2) is configured as a switchable multiway valve which, upon corresponding actuation, makes ventilation and/or emptying of the line system possible, whereby the module block comprises thermally conducting elements (4) which are designed to extend into the volume of the storage vessel (1) and being spaced apart from the line system.

## Revendications

1. Système de stockage et d'alimentation d'un fluide auxiliaire vers un moteur à combustion interne d'un véhicule automobile ou vers des parties du moteur à combustion interne du véhicule automobile, comportant un réservoir de stockage (1) destiné au fluide auxiliaire, au moins une pompe de transport (7) destinée au fluide auxiliaire et au moins un système de conduites comprenant une amenée menant à un consommateur et un retour menant au réservoir de stockage (1), le système comprenant un module de raccordement (2) qui est inséré dans une ouverture du réservoir de stockage (1), le module de raccordement (2) présentant des canaux de fluide qui communiquent avec le réservoir de stockage (1) et qui sont raccordés à une conduite d'amenée (8) et à une conduite de retour (10) du système de conduites, et le module de raccordement (2) comprenant un bloc de modules conçu comme un corps thermiquement conducteur et/ou chauffable, et le module de raccordement (2) étant conçu comme une soupape multivoies commutable qui, lors d'un actionnement approprié, permet une ventilation et/ou une vidange du système de conduites,
**caractérisé en ce que** le bloc de modules comprend des éléments conducteurs de chaleur (4) qui s'étendent dans le volume du réservoir de stockage (1), les éléments conducteurs de chaleur (4) étant espacés du système de conduites.

2. Système selon la revendication 1, **caractérisé en ce que** le module de raccordement (2) comprend des moyens permettant la détente du retour du liquide auxiliaire à l'intérieur du réservoir de stockage (1).

3. Système selon l'une des revendications 1 ou 2, **caractérisé en ce que** le module de raccordement (2) comprend un raccord de ventilation (2a) pouvant être commandé par actionnement, un filtre étant de préférence placé en amont de celui-ci.

4. Système selon l'une des revendications 1 à 3, **caractérisé en ce que** le module de raccordement comprend un chauffage électrique de dégivrage et **en ce que** le corps conducteur de chaleur (4) est conçu comme corps chauffant du chauffage électrique de dégivrage.

5. Système selon l'une des revendications 1 à 4, **caractérisé par** des moyens de ventilation et/ou de vidange du système de conduites après l'arrêt du fonctionnement du moteur à combustion interne.

6. Système selon la revendication 5, **caractérisé en ce que** des moyens de commande de la ventilation et/ou de la vidange du système de conduites sont prévus en fonction de l'état de fonctionnement du moteur à combustion interne et/ou du système.

7. Système selon l'une des revendications 5 ou 6, **caractérisé en ce qu'**un point d'aspiration de la conduite d'amenée (8) prévu dans le réservoir de stockage (1) est disposé en amont d'un siphon ou d'un tuyau montant dans la conduite d'amenée.

8. Système selon l'une des revendications 5 à 7, **caractérisé en ce qu'**une soupape anti-retour (11) est prévue dans la conduite de retour (10) dans le réservoir de stockage (1) ou avant ou au niveau de son entrée dans le réservoir de stockage (1), laquelle soupape anti-retour empêche, lors de la ventilation et/ou la vidange du système, le liquide auxiliaire d'être re-aspiré du réservoir de stockage (1) vers le système de conduite.

9. Procédé de fonctionnement d'un système de stockage et d'alimentation d'un fluide auxiliaire vers un moteur à combustion interne d'un véhicule automobile ou vers des parties du moteur à combustion interne du véhicule automobile selon l'une des revendications 1 à 8, **caractérisé en ce qu'**une ventilation et/ou une vidange du système de conduites sont prévues respectivement après l'arrêt du fonctionnement du moteur à combustion interne et de préférence en fonction de la température ambiante.

10. Module de raccordement chauffable destiné à une cuve d'injection d'eau comme réservoir de stockage destiné à un système de stockage et d'alimentation d'un fluide auxiliaire vers un moteur à combustion interne d'un véhicule automobile selon l'une des revendications 1 à 8, le module de raccordement (2) étant conçu comme un corps de fermeture destiné à une ouverture du réservoir de stockage (1), le module de raccordement (2) présentant des canaux de fluide qui peuvent être raccordés à une conduite d'amenée (8) et à une conduite de retour (10) d'un système de conduites afin de communiquer avec le réservoir de stockage (1) et le module de raccordement (2) comprenant un bloc de modules qui est conçu comme un corps thermiquement conducteur et/ou chauffable et qui est conçu comme une soupape multivoies commutable comportant un raccord de ventilation et/ou un raccord de vidange,
**caractérisé en ce que**
le bloc de modules comprend des éléments conducteurs de chaleur (4) qui sont conçus pour s'étendre dans le volume du réservoir de stockage (1) et pour être espacés du système de conduites.
